# EUROPEAN PATENT APPLICATION

(11) **EP 4 663 463 A1**
(43) Date of publication of application: **17.12.2025**
(21) Application number: 25172646.9
(22) Date of filing: 25.04.2025
(51) Int. Cl.: B60L 15/20, B60K 35/22, B60K 35/28, B60K 35/81

(54) **DISPLAY SYSTEM OF MOTOR VEHICLE**

(30) Priority: 10.06.2024 JP 2024093591
(71) Applicant: Suzuki Motor Corporation, Shizuoka 432-8611 (JP)
(72) Inventor: SAEKI, Hideyuki, HAMAMATSU-SHI, 432-8611 (JP)
(74) Representative: Plasseraud IP

(57) **Abstract**

It is to provide a display system of a motor vehicle capable of avoiding a user from feeling uncomfortable at a power display for a traction motor.

[Solution]

There are provided: a traction motor 2 to generate a drive force to thereby drive a motor vehicle 1; a power meter 3 to display an output of the traction motor in percentage; a display control unit 41 to cause the power meter to display percentage of a value to be obtained by dividing a generated motor torque by the traction motor by a rated torque of the traction motor when a vehicle speed of the motor vehicle is in a vehicle stop range of a predetermined vehicle speed or lower, otherwise calculate a drive power by multiplying the generated motor torque by a rotation speed of the traction motor and cause the power meter to display percentage of the calculated drive power with respect to a rated output of the traction motor.

## Description

### [Technical Field]

The present invention relates to a display system of a motor vehicle.

### [Background Art]

Patent Literature 1 discloses that a calculated drive power is displayed on a drive power gauge.

As such, a motor vehicle includes a power meter to display the drive power of a traction motor. Generally, this power meter includes a function of displaying an output (in percent) of the traction motor.

Specifically, a drive output [kW] is to be calculated by multiplying a motor torque by a rotation speed (i.e., drive output is a multiplication value between motor torque and rotation speed of the traction motor). The percentage [%] to be displayed by the power meter is to be obtained by dividing the calculated drive output by a rated output (i.e., percentage of the calculated drive output with respect to the rated output is to be displayed by the power meter).

### [Citation List]

### [Patent Literature]

[Patent Literature 1] JP 2014-114002 A

### [Summary of Invention]

### [Technical Problem]

Such a drive output corresponds to a multiplication between the motor torque and the rotation speed and hence, is to be zero [kW] to thereby cause the power meter to display the percentage of "0%", in a vehicle stop state, where e.g., a drive force and a sliding down are balanced at an uphill road, or a brake pedal and an accelerator pedal are both depressed.

However, the traction motor actually outputs the motor torque to be balanced with the sliding down of the motor vehicle, for which an electric power is consumed.

For this reason, there is a problem that the user of the motor vehicle may feel uncomfortable due to a display indicative of a power of the traction motor.

Thus, an object of the present invention is to provide a display system of a motor vehicle capable of avoiding a user from feeling uncomfortable at a power display for a traction motor.

### [Solution to Problem]

According to an aspect of the present invention, there is provided a display system of a motor vehicle with a traction motor to generate a motor torque to thereby drive the motor vehicle, the display system including: a power meter to display an output of the traction motor in percentage; and a control unit including a display control part for the power meter, wherein the display control part is configured to: when a vehicle speed of the motor vehicle is in a vehicle stop range of a predetermined vehicle speed or lower, cause the power meter to display a torque base percentage of a percentage of the generated motor torque by the traction motor with respect to a rated torque of the traction motor; and otherwise, calculate a drive power of multiplication value between the generated motor torque by the traction motor and a rotation speed of the traction motor, to thereby cause the power meter to display a power base percentage of a percentage of the calculated drive power with respect to a rated output of the traction motor.

### [Advantageous Effect of Invention]

According to the present invention, it is possible to avoid a user from feeling uncomfortable at a power display for a traction motor.

### [Brief Description of Drawings]

Fig. 1 is a block diagram of a motor vehicle mounted with a display system according to an embodiment of the present invention.
Fig. 2 is a flowchart which shows procedures of a power display control process to be performed in the display system according to the embodiment of the present invention.
Fig. 3 is a flowchart which shows procedures of an output restriction control process to be performed in the display system according to the embodiment of the present invention.
Fig. 4 is a flowchart which shows procedures of a power display control process to be performed in a display system according to another embodiment of the present invention.

### [Description of Embodiment]

A display system according to an embodiment of the present invention is mounted on a motor vehicle with a traction motor to generate a motor torque to thereby drive the motor vehicle, the display system including: a power meter to display an output of the traction motor in percentage; and a control unit including a display control part for the power meter, wherein the display control part is configured to: when a vehicle speed of the motor vehicle is in a vehicle stop range of a predetermined vehicle speed or lower, cause the power meter to display a torque base percentage of a percentage of the generated motor torque by the traction motor with respect to a rated torque of the traction motor; and otherwise, calculate a drive power of multiplication value between the generated motor torque by the traction motor and a rotation speed of the traction motor, to thereby cause the power meter to display a power base percentage of a percentage of the calculated drive power with respect to a rated output of the traction motor.

Accordingly, it is possible to avoid a user from feeling uncomfortable at a power display for a traction motor.

### [Embodiments]

Hereinafter, referring to Figs., a display system of a motor vehicle according to embodiments of the present invention will be described.

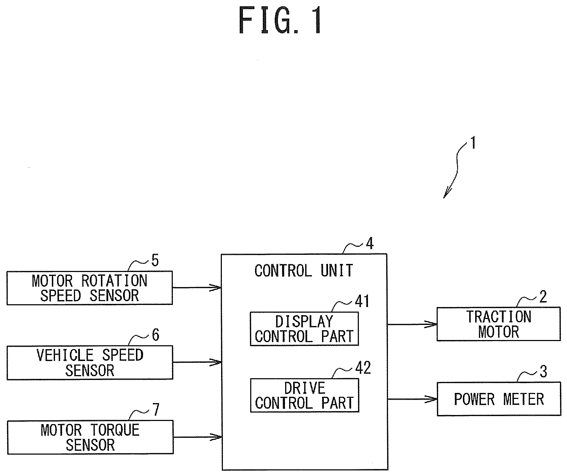

As shown in Fig. 1, a motor vehicle 1 mounted with a display system according to an embodiment of the present invention includes a traction motor 2, a power meter 3, and a control unit 4.

The traction motor 2 is connected to driving wheels (not shown) through a power transmission member such as a gear mechanism, to thereby transmit a power of the traction motor to the driving wheels.

The traction motor 2 has a motor function of rotating the driving wheels with an electric power supplied from a battery (not shown) or the like, and a generator function of converting a rotation force of the driving wheels into an electric power.

The power meter 3 is configured to display a current output (e.g., drive torque [Nm] or drive power [W]) of the traction motor 2 as a percentage.

For example, this power meter 3 is of a monitor device, a lump, and/or a meter, which is arranged on an instrument panel of the motor vehicle 1.

The control unit 4 is constituted by a computer unit including a Central Processing Unit (CPU), a Random Access Memory (RAM), a Read Only Memory (ROM), a flash memory to store a backup data and the like, and input and output ports.

The ROM of the computer unit stores a program for causing the computer unit to function as the control unit 4, in addition to various constants and maps.

That is, the CPU executes the program stored in the ROM using the RAM as an operation area, thereby causing the computer unit to function as the control unit 4.

The input port of the control unit 4 is electrically connected with various sensors such as a motor rotation speed sensor 5, a vehicle speed sensor 6, and a motor torque sensor 7.

The motor rotation speed sensor 5 is configured to detect a rotation speed of a rotation shaft of the traction motor 2.

The vehicle speed sensor 6 is configured to detect a speed of the motor vehicle 1 (hereinafter also referred to as "vehicle speed").

The motor torque sensor 7 is configured to detect a torque which is currently generated (outputted) by the traction motor 2 (hereinafter also referred to as "motor torque" or "drive torque").

Meanwhile, the output port of the control unit 4 is electrically connected with various control targets such as the traction motor 2, and the power meter 3.

The control unit 4 includes a display control part 41 for the power meter 3, and a drive control part 42 for the traction motor 2.

The drive control part 42 is configured to regulate the output of the traction motor 2 via the torque, when the vehicle speed is in a torque restriction range of a predetermined for-torque-restriction vehicle speed (a first threshold value) or lower.

Considering a hardware restriction of the battery and/or the traction motor 2, not a power [W] but an outputtable torque [Nm] is to be determined therefrom. Hence, within a low vehicle-speed range, the drive control part 42 is to regulate the torque to be outputted from the traction motor 2.

The display control part 41 is configured to cause the power meter 3 to display a percentage of a value (hereinafter also referred to as "torque base percentage"), which is obtained by dividing the motor torque of the traction motor 2 by the rated torque thereof (i.e., torque base percentage (%) = (motor torque/rated torque)× 100), when the vehicle speed is in a vehicle stop range of a predetermined vehicle speed (a second threshold value) or lower.

The display control part 41 may consider the torque restriction range as being the same as the vehicle stop range (i.e., the first and second threshold values may be the same).

On the other hand, unless the vehicle speed is in the vehicle stop range (i.e., when the vehicle speed exceeds the predetermined vehicle speed), the display control part 41 calculates a drive power (hereinafter referred to as "drive output"), by multiplying the generated motor torque by the traction motor 2 by the rotation speed of the traction motor 2, and causes the power meter 3 to display a percentage of the calculated drive output with respect to a rated output of the traction motor 2 (hereinafter also referred to as "power base percentage" ) (e.g., power base percentage (%) = (calculated drive output/rated output)×100).

This is because, in a range except for the vehicle stop range, e.g., while the motor vehicle 1 travels at a high speed, if the motor torque is displayed as the torque base percentage (percentage of the motor torque with respect to the rated torque of the traction motor 2) for the user, the value of the displayed torque base percentage becomes small even with the accelerator pedal being depressed, due to the reduced motor torque in such a high speed travel state.

That is, at a high vehicle-speed, the value of the motor torque is likely to result in a mismatch to the user's acceleration work, thereby causing a possibility that the use may feel uncomfortable.

For this reason, except for the vehicle stop range, i.e., while the motor vehicle 1 travels at a higher speed than the predetermined vehicle speed, the display control part 41 causes the power meter 3 to display the power base percentage (percentage of the drive output of the traction motor 2 with respect to the rated output thereof) for the user.

Even with the motor vehicle 1 being in the vehicle stop range, i.e., even with the current vehicle speed being the predetermined vehicle speed or lower, if the current motor torque of the traction motor 2 is a predetermined value or less, the display control part 41 causes the power meter 3 to display the torque base percentage of 0%, not depending on the value of the current motor torque.

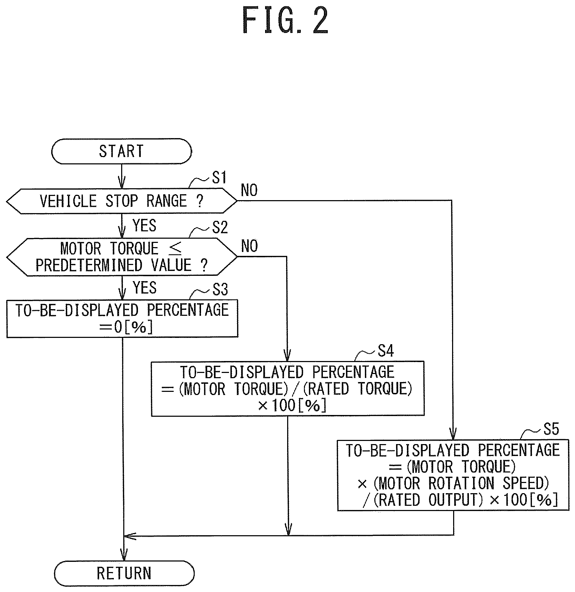

Next, referring to Fig. 2, a power display control process to be performed by the display control part 41 in the display system according to the present embodiment will be explained. This process is to be started upon a start of the control unit 4, to thereby be repeated at a predetermined interval.

At step S1, the display control part 41 determines whether or not the current vehicle speed of the motor vehicle 1 is in the vehicle stop range of the predetermined vehicle speed or lower.

If determines that the current vehicle speed of the motor vehicle 1 is in the vehicle stop range ("YES" at step S1), the display control part 41 proceeds to step S2.

Otherwise ("NO" at step S1), the display control part 41 proceeds to step S5.

At step S2, the display control part 41 determines whether or not: the current motor torque (absolute value) is the predetermined value or less.

If determines that the current motor torque is the predetermined value or less ("YES" at step S2), the display control part 41 proceeds to step S3.

Otherwise ("NO" at step S2), the display control part 41 proceeds to step S4.

At step S3, the display control part 41 causes the power meter 3 to display the percentage of "0%". After step S3, the display control part 41 terminates this process.

At step S4, the display control part 41 causes the power meter 3 to display the torque base percentage (percentage of the generated motor torque by the traction motor 2 with respect to the rated torque thereof). After step S4, the display control part 41 terminates this process.

At step S5, the display control part 41 causes the power meter 3 to display the power base percentage (percentage of the multiplication value between the generated motor torque by the traction motor 2 and the rotation speed of the traction motor 2 with respect to the rated output thereof). After step S5, the display control part 41 terminates this process.

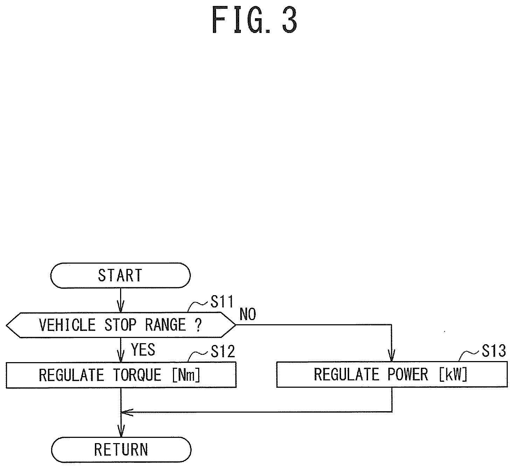

Next, referring to Fig. 3, an output restriction control process to be performed by the drive control part 42 in the display system according to the present embodiment will be explained. This process is to be started upon a start of the control unit 4, to thereby be repeated at the predetermined interval.

That is, this output restriction control process is to be performed at the same timing as the above-mentioned power display control process.

At step S11, the drive control part 42 determines whether or not the current vehicle speed of the motor vehicle 1 is in the vehicle stop range of the predetermined vehicle speed or lower. Note that the drive control part 42 may refer to the result of step S1 by the display control part 41.

If determines that the current vehicle speed of the motor vehicle 1 is in the vehicle stop range ("YES" at step S11), the drive control part 42 proceeds to step S12.

Otherwise ("NO" at step S11), the drive control part 42 proceeds to step S13.

At step S12, the drive control part 42 regulates a torque [Nm] to be outputted from the traction motor 2. Specifically, the drive control part 42 sets a target torque based on the depression amount of the accelerator pedal, a road slope, and the like, and drives the traction motor 2 so as to output the set target torque, for example.

After step S12, the drive control part 42 terminates this process.

At step S13, the drive control part 42 regulates a power [kW] to be outputted from the traction motor 2. Specifically, the drive control part 42 sets a target power based on the depression amount of the accelerator pedal, the road slope, and the like, and drives the traction motor 2 so as to output the set target power, for example. That is, at step S13, the drive control part 42 drives the traction motor 2 in consideration of not only the torque but also the rotation speed of the traction motor 2.

After step S13, the drive control part 42 terminates this process.

As such, the display system according to the present embodiment is configured to, when the vehicle speed is in the vehicle stop range of the predetermined vehicle speed or lower, cause the power meter 3 to display the torque base percentage (percentage of the generated motor torque by the traction motor 2 with respect to the rated torque thereof).

Accordingly, for example, when the motor vehicle 1 stops at an uphill road with the motor torque balancing with the sliding down of the motor vehicle 1 while the user depresses the accelerator pedal, the value (> 0) of the motor torque independent from the rotation speed of the traction motor 2 is to be displayed for the user, allowing the user to recognize it as a value associated with the user's acceleration work.

On the other hand, except for the vehicle stop range, i.e., while the motor vehicle 1 travels at a higher speed than the predetermined vehicle speed, the display system according to the present embodiment is configured to:
calculate the drive output of multiplication value between the generated motor torque by the traction motor 2 and the rotation speed of the traction motor 2; and
cause the power meter 3 to display the power base percentage (percentage of the calculated drive output with respect to the rated output of the traction motor 2.

Thus, the display system is to switch between respective values for drive torque and drive power to be displayed, in response to a vehicle state (e.g., a substantial stop state at an uphill road, and a travel state), thereby avoiding the user from feeling uncomfortable due to a mismatch between the user's acceleration work and the power meter's display.

Additionally, if the motor torque is the predetermined torque or less with the motor vehicle 1 being in the vehicle stop range, the display system causes the power meter 3 to display "0%". This is because, for example, when a minute torque is outputted to thereby reduce a gear backlash, if the motor torque is displayed as a finite value (> 0) even with the motor vehicle 1 being stopped (with the accelerator pedal being released), the user may mistakenly guess that there is a failure in the motor vehicle 1.

Additionally, since the torque restriction range, where the traction motor 2 is driven to output the set target torque in accordance with the accelerator pedal amount and the like, overlaps the vehicle stop range, i.e., the torque base percentage is displayed for the user while the motor torque is regulated in accordance with the user's acceleration work without considering the rotation speed of the traction motor 2, the percentage to be displayed is to vary with the user's acceleration work.

Next, a display system according to another embodiment of the present invention will be explained.

As another embodiment, the display control part 41 is configured to:
calculate the power base percentage (percentage of the drive output of multiplication value between the generated motor torque by the traction motor 2 and the rotation speed thereof, with respect to the rated output of the traction motor 2);
calculate the torque base percentage (percentage of the generated motor torque by the traction motor 2 with respect to the rated torque of the traction motor 2);
compare these calculated percentages with each other; and
cause the power meter 3 to display higher one of them.

Preferably, the display control part 41 applies a filter to the higher one, to thereby cause the power meter 3 to display the higher one applied with the filter.

This filter is configured to prevent a value from suddenly changing to thereby smooth the change.

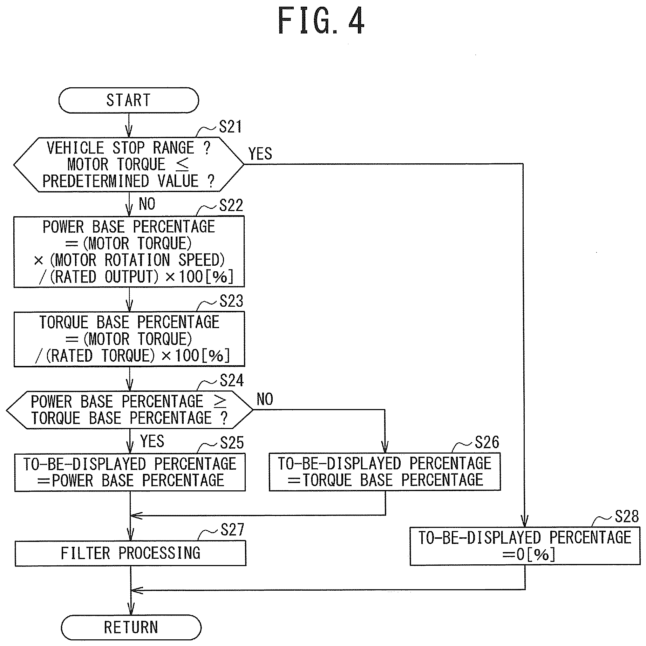

Next, referring to Fig. 4, a power display control process to be performed by the display control part 41 in the display system according to the another embodiment will be explained. This process is to be started upon a start of the control unit 4, to thereby be repeated at a predetermined interval.

At step S21, the display control part 41 determines:
whether or not the current vehicle speed of the motor vehicle 1 is in the vehicle stop range of the predetermined vehicle speed or lower; and
whether or not the current motor torque is the predetermined value or less.

If determines that the current vehicle speed of the motor vehicle 1 is in the vehicle stop range and that the current motor torque is the predetermined value or less ("YES" at step S21), the display control part 41 proceeds to step S28.

Otherwise ("NO" at step S21), the display control part 41 proceeds to step S22.

At step S22, the display control part 41 calculates the power base percentage (percentage of the drive output of multiplication value between the generated motor torque by the traction motor 2 and the rotation speed thereof, with respect to the rated output of the traction motor 2). After step S22, the display control part 41 proceeds to step S23.

At step S23, the display control part 41 calculates the torque base percentage (percentage of the generated motor torque by the traction motor 2 with respect to the rated torque of the traction motor 2). After step S23, the display control part 41 proceeds to step S24.

At step S24, the display control part 41 determines whether or not: the calculated power base percentage at step S22 is the calculated torque base percentage at step S23 or higher.

If determines that the calculated power base percentage is the calculated torque base percentage or higher ("YES" at step S24), the display control part 41 proceeds to step S25.

Otherwise ("NO" at step S24), the display control part 41 proceeds to step S26.

At step S25, the display control part 41 selects the calculated power base percentage as a percentage to be displayed (hereinafter also referred to as "to-be-displayed percentage". After step S25, the display control part 41 proceeds to step S27.

At step S26, the display control part 41 selects the calculated torque base percentage as the to-be-displayed percentage. After step S26, the display control part 41 proceeds to step S27.

At step S27, the display control part 41 applies a filter to the selected one of the calculated power and torque base percentages as the to-be-displayed percentage, to thereby cause the power meter 3 to display it. After step S27, the display control part 41 terminates this process.

At step S28, the display control part 41 causes the power meter 3 to display "0%". After step S28, the display control part 41 terminates this process.

As such, in the display system according to the another embodiment, higher one of the power base percentage and the torque base percentage is to be displayed by the power meter 3 for the user. Thus, in a low vehicle speed range, where the traction motor 2 rotates at a low rotation speed, the power base percentage is expected to be smaller than the torque base percentage and thus, the power meter 3 is to display the torque base percentage, thereby avoiding the user from feeling uncomfortable due to the mismatch between the user's acceleration work and the power display.

On the other hand, in a high vehicle speed range, where the motor torque tends to decrease, the torque base percentage is expected to be smaller than the power base percentage and thus, the power meter 3 is to display the power base percentage, thereby realizing the power display for the traction motor 2 in association with the user's acceleration work.

Then, the higher one may be applied with a filter, to thereby be displayed as the filter-applied value. In this case, it is possible to prevent the to-be-displayed percentage (value of the higher one) from suddenly changing.

The embodiments, in which the control unit 4 performs various determinations and calculations based on various pieces of sensor information, have been described, but not limited to.

The motor vehicle 1 may include a communication unit capable of communicating with an external device such as an external server. Then, various determinations and calculations may be performed by the external device based on detection information of various sensors sent from the communication unit, determination results and calculation results are received by the communication unit, and the received determination results and calculation results may be used to perform various control operations.

Although the embodiments of the present invention have been disclosed, it is obvious that those skilled in the art can make changes without departing from the scope of the present invention. It is intended that all such modifications and equivalents are encompassed by the claims.

### [Reference Signs List]

- 1:: motor vehicle
- 2:: traction motor
- 3:: power meter
- 4:: control unit
- 5:: motor rotation speed sensor
- 6:: vehicle speed sensor
- 7:: motor torque sensor
- 41:: display control part
- 42:: drive control part

## Claims

1. A display system of a motor vehicle (1) with a traction motor (2) to generate a motor torque to thereby drive the motor vehicle (1), the display system comprising:
a power meter (3) to display an output of the traction motor (2) in percentage; and
a control unit (4) including a display control part (41) for the power meter (3), wherein
the display control part (41) is configured to:
when a vehicle speed of the motor vehicle (1) is in a vehicle stop range of a predetermined vehicle speed or lower, cause the power meter (3) to display a torque base percentage of a percentage of the generated motor torque by the traction motor (2) with respect to a rated torque of the traction motor (2); and
otherwise, calculate a drive power of multiplication value between the generated motor torque by the traction motor (2) and a rotation speed of the traction motor (2), to thereby cause the power meter (3) to display a power base percentage of a percentage of the calculated drive power with respect to a rated output of the traction motor (2).

2. The display system as claimed in claim 1, wherein
when the vehicle speed is in the vehicle stop range, if the generated motor torque by the traction motor (2) is a predetermined torque or less, the display control part (41) causes the power meter (3) to display the torque base percentage as zero [%], not depending on a value of the generated motor torque.

3. The display system as claimed in claim 1 or 2, wherein
the control unit (4) includes a drive control part (42), and
the drive control part (42) is configured to regulate the motor torque to be outputted from the traction motor (2), when the vehicle speed is in the vehicle stop range.

4. A display system of a motor vehicle (1) with a traction motor (2) to generate a motor torque to thereby drive the motor vehicle (1), the display system comprising:
a power meter (3) to display an output of the traction motor (2) in percentage; and
a control unit (4) including a display control part (41) for the power meter (3), wherein
the display control part (41) is configured to:
calculate a power base percentage of a percentage of a drive power with respect to a rated output of the traction motor (2), the drive power being of multiplication value between the generated motor torque by the traction motor (2) and a rotation speed of the traction motor (2);
calculate a torque base percentage of a percentage of the generated motor torque by the traction motor (2) with respect to a rated torque of the traction motor (2); and
compare the calculated power and torque base percentages with each other, to thereby cause the power meter (3) to display higher one of them.

5. The display system as claimed in claim 4, wherein
the display control part (41) applies a filter to the higher one of the calculated power and torque base percentages, to thereby cause the power meter (3) to display the higher one applied with the filter.

6. The display system as claimed in claim 4 or 5, wherein
when a vehicle speed of the motor vehicle (1) is in a vehicle stop range of a predetermined vehicle speed or lower, if the generated motor torque by the traction motor (2) is a predetermined torque or less, the display control part (41) causes the power meter (3) to display zero [%], not depending on a value of the higher one.
